# EUROPÄISCHE PATENTSCHRIFT

(11) **EP 3 765 999 B1**
(45) Veröffentlichungstag und Bekanntmachung des Hinweises auf die Patenterteilung: **04.05.2022**
(21) Anmeldenummer: 19712926.5
(22) Anmeldetag: 14.03.2019
(51) Int. Cl.: G06K 9/00, G06N 3/04

(54) **SYSTEM UND VERFAHREN ZUR OBJEKTERKENNUNG MITTELS VERTEILTER NEURONALER NETZE**
SYSTEM AND METHOD FOR IDENTIFYING OBJECTS BY MEANS OF DISTRIBUTED NEURAL NETWORKS
SYSTÈME ET PROCÉDÉ DE RECONNAISSANCE D'OBJETS AU MOYEN DE RÉSEAUX NEURONAUX RÉPARTIS

(30) Priorität: 16.03.2018 DE 102018106222; 04.05.2018 DE 102018110828
(43) Veröffentlichungstag der Anmeldung: 20.01.2021
(73) Patentinhaber: Rockwell Collins Deutschland GmbH, 69123 Heidelberg (DE)
(72) Erfinder: FEIGENBUTZ, Michael, 69181 Leimen (DE)
(74) Vertreter: Müller Hoffmann & Partner
(86) Internationale Anmeldenummer: PCT/EP2019/056418
(87) Internationale Veröffentlichungsnummer: WO 2019/175309

(56) Entgegenhaltungen:
- US-A1- 2017 076 195
- TEERAPITTAYANON SURAT ET AL: "Distributed Deep Neural Networks Over the Cloud, the Edge and End Devices", PROCEEDINGS OF THE INTERNATIONAL CONFERENCE ON DISTRIBUTED COMPUTING SYSTEMS, IEEE COMPUTER SOCIETY, US, 5. Juni 2017 (2017-06-05), Seiten 328-339, XP033122945, ISSN: 1063-6927, DOI: 10.1109/ICDCS.2017.226 [gefunden am 2017-07-13]

## Beschreibung

Die Erfindung betrifft ein System und ein verfarhen zur Objekterkennung mittels verteilter Neuronaler Netze.

Grundsätzlich besteht die Struktur eines klassischen konvolutionalen neuronalen Netzwerks (Convolutional Neural Network - CNN) aus einem oder mehreren Convolutional Layer, gefolgt von einem Pooling Layer. Diese Einheit kann sich prinzipiell beliebig oft wiederholen; bei ausreichend vielen Wiederholungen spricht man dann von Deep Convolutional Neural Networks, die in den Bereich Deep Learning fallen.

Konvolutionale neuronale Netzwerke für die Echtzeit-Objekterkennung in hochauflösenden Videos benötigen eine adäquate Rechnerleistung, Speicherplatz und Unterstützung durch spezielle komplexe Grafikbausteine. Die genannten Rechner-Ressourcen haben üblicherweise einen erheblichen Strom- und Platzbedarf und sind entsprechend schwer.

Auf kleinen und mittleren ferngesteuerten Fahrzeugen (hier insbesondere unbemannte Luftfahrzeuge) können die Anforderungen an Größe, Gewicht und Strombedarf nicht erfüllt werden.

Ein weiteres Problem sind die Kosten solcher Lösungen auf dem Fahrzeug. Dies gilt bei kleinen und mittleren Fahrzeugen sowohl für die Stückkosten, als auch für die Kosten zukünftiger Verbesserungen.

Zudem müssen derartige Netze über Beispiele angelernt werden und können nach der Anlernphase (ohne Feedback) nicht selbständig weiterlernen.

Relevante Dokumente zum Stand der Technik sind:
- TEERAPITTAYANON SURAT ET AL: "Distributed Deep Neural Networks Over the Cloud, the Edge and End Devices", PROCEEDINGS OF THE INTERNATIONAL CONFERENCE ON DISTRIBUTED COMPUTING SYSTEMS, IEEE COMPUTER SOCIETY, US, 5. Juni 2017, Seiten 328-339, ISSN: 1063-6927,
- US 2017/076195 A1.

Der Erfindung liegt die Aufgabe zugrunde, eine Echtzeit Objekterkennung mittels Neuronaler Netzwerk Technologie anzugeben, für ferngesteuerte Fahrzeuge mit begrenzten Rechner-Ressourcen und limitierter Link-Bandbreite. Damit soll eine Verbesserung der Echtzeit-Objekterkennung mittels Neuronaler Netzwerk Technologie mittels verteilter Netze erreicht werden. Zudem soll unter bestimmten Umständen ein kontinuierliches automatisches Weiterlernen bereits angelernter Neuronaler Netze ermöglicht werden.

Die Aufgabe wird gelöst durch ein System mit dem Merkmalen von Anspruch 2-1 und ein Verfahren mit dem Merkmalen von Anspruch 4.

Vorteilhafte Ausgestaltungen sind in den abhängigen Ansprüchen angegeben.

Bei einem System zur Objekterkennung mittels verteilter Neuronaler Netze wird der Ressourcen-intensive Anteil des Neuronalen Netzwerks auf eine Basisstation (am Boden) verlagert, wo keine bedeutenden Limitierungen bezüglich Größe, Gewicht und Stromverbrauch vorhanden sind, während auf dem Frontend (z.B. ferngesteuertes Fahrzeug) lediglich die Feature Maps bzw. die Charakterisierung bearbeitet werden.

Bei einer Variante kann ein hoch-performantes Neuronales Netzwerk auf einer Basisstation (am Boden) vorgesehen sein, während ein geringer-performantes Neuronales Netzwerk auf einer Frontendseite, insbesondere einem Fahrzeug wie z.B. einem Luftfahrzeug, vorgesehen sein kann.

Dabei kann auf der Frontendseite eine hochauflösende Kameravorrichtung vorgesehen sein, zum Erzeugen eines hochauflösenden Videos. Das frontendseitige Neuronale Netzwerk kann ausgebildet sein, um in dem Video "interessante" Bildbereiche zu erkennen und zu markieren. Als "interessante" Bildbereiche sind dabei Bildbereiche zu verstehen, die - je nach Auftrag der Objekterkennungsmission - charakteristische Merkmale enthalten, die möglicherweise auf zu erkennende Objekte rückschließen lassen, wobei aber eine abschließende Bewertung und Charakterisierung noch nicht möglich ist.

Eine Videoverarbeitungseinrichtung ist vorgesehen, zum Auswählen und Definieren von ROIs (ROI - "Region of Interest") aufgrund der vorher erkannten interessanten Bildbereiche und zum Codieren der ROIs in das Video. Die ROIs sind insoweit eine Weiterführung der zuvor als "interessante" Bildbereiche charakterisierten Bereiche.

Weiterhin ist eine Daten-Funkverbindung vorgesehen, zum Übertragen des Videos von der Videoverarbeitungseinrichtung zu der Basisstation.

Das basisstationsseitige Neuronale Netzwerk ist ausgebildet, um aus dem empfangenen Video extrahierte ROIs auszuwerten und in den ROIs vorhandene Objekte zu erkennen. Die ROIs werden in der Basisstation aus dem empfangenen Video extrahiert und dem Neuronalen Netzwerk zur Verfügung gestellt.

Das basisstationsseitige Neuronale Netzwerk ist erheblich tiefer ausgebildet als das frontendseitige Neuronale Netzwerk. Damit kann basisstationsseitige Neuronale Netzwerk über nahezu unlimitierte Ressourcen zur Analyse und Objekterkennung verfügen. Ein damit betrauter KI-Rechner (Künstliche Intelligenz) stellt schließlich das gesamte Video neu zusammen und ergänzt insbesondere die durch das basisstationsseitige Neuronale Netzwerk identifizierten Objekte. Das Video kann die ROIs enthalten, mit neuen Objektgrenzen, einer Klassifizierung für die identifizierten Objekte und den Symbolen für weitere Bereiche, die nicht als ROI codiert wurden.

Es kann eine Anzeigeeinrichtung vorgesehen sein, zum Anzeigen der von dem basisstationsseitigen Neuronalen Netzwerk erkannten Objekte bzw. des damit erstellten Videos.

Es kann eine Bedieneinrichtung vorgesehen sein, zum Verändern von Parametern des Systems; wobei wenigstens einer der Parameter ausgewählt ist aus der Gruppe
+ Lage der ROIs;
+ Größe der ROIs;
+ Wertung der ROIs;
+ Darstellung einer ROI;
+ Definieren einer neuen ROI;
+ Festlegen eine Farb- oder Schwarz-Weiß-Darstellung

Mithilfe der Bedieneinrichtung kann der Operateur am Boden die Darstellung dynamisch verändern.

Weiterhin wird ein Verfahren zur Objekterkennung angegeben, mit den Schritten
- Bereitstellen eines hoch-performantes Neuronales Netzwerk auf einer Basisstation;
- Bereitstellen eines geringer-performanten Neuronalen Netzwerks auf einer Frontendseite;
- Erzeugen eines hochauflösenden Videos auf der Frontendseite;
- Erkennen von interessanten Bildbereichen in dem Video durch das frontendseitige Neuronale Netzwerk und Markieren dieser Bildbereiche;
- Auswählen und Definieren von ROIs (ROI - "Region of Interest") aufgrund der vorher erkannten interessanten Bildbereiche und Codieren der ROIs in das Video;
- Übertragen des Videos von der Frontendseite zu der Basisstation;
- Extrahieren von ROIs aus dem empfangenen Video;
- Auswerten der extrahierten ROIs und Erkennen von in den ROIs vorhandenen Objekten durch das basisstationsseitige Neuronale Netzwerk.

Damit kann der technische Aufwand für die Frontend-Seite sowie für die Übermittlung der Daten zwischen Basisstation und Frontend vermindert werden.

Die vorgeschlagene Lösung trägt zu einer Verbesserung aller Systeme bei, die eine Objekterkennung mittels Videoverarbeitung (z.B. für ferngesteuerte Anwendungen) adressieren.

Derartige Systeme können z.B. für unbemannte Luftfahrzeuge (z.B. Drohnen) eingesetzt werden. Ein Anwendungsgebiet könnte die drohnengestützte Suche nach Opfern bei Naturkatastrophen sein. Die Drohne kann dann mithilfe der sowohl auf die Drohne selbst als auch auf die Basisstation verteilte Künstliche Intelligenz in Form von Neuronalen Netzen hilfebedürftige Opfer suchen und identifizieren. Auf diese Weise könnte eine erhebliche Vereinfachung und Beschleunigung der Arbeit der Rettungsdienste erreicht werden.

Die Erfindung wird anhand eines Beispiels unter Zuhilfenahme der begleitenden Figuren erläutert. Es zeigen:
- **Fig. 1**: in schematischer Darstellung ein System zur Objekterkennung, mit einer Aufteilung auf Feature Mapping Layer und Full Connected Lay-er;
- **Fig. 2**: das Schema von Fig. 1 in anderer Darstellung;
- **Fig. 3**: eine Tabelle mit einer Übersicht über die Anteile an Lernparametern in den Feature Mapping Layers und den Fully Connected Layers;
- **Fig. 4**: das System zur Objekterkennung in einer anderen Darstellung;
- **Fig. 5**: das System zur Objekterkennung in einer weiteren Darstellung; und
- **Fig. 6**: eine Variante des Systems zur Objekterkennung.

Die vorgeschlagene Lösung erlaubt es, den Ressourcen-intensiven Anteil des Neuronalen Netzwerks auf eine Basisstation (am Boden) zu verlagern, wo keine bedeutenden Limitierungen bezüglich Größe, Gewicht und Stromverbrauch vorhanden sind.

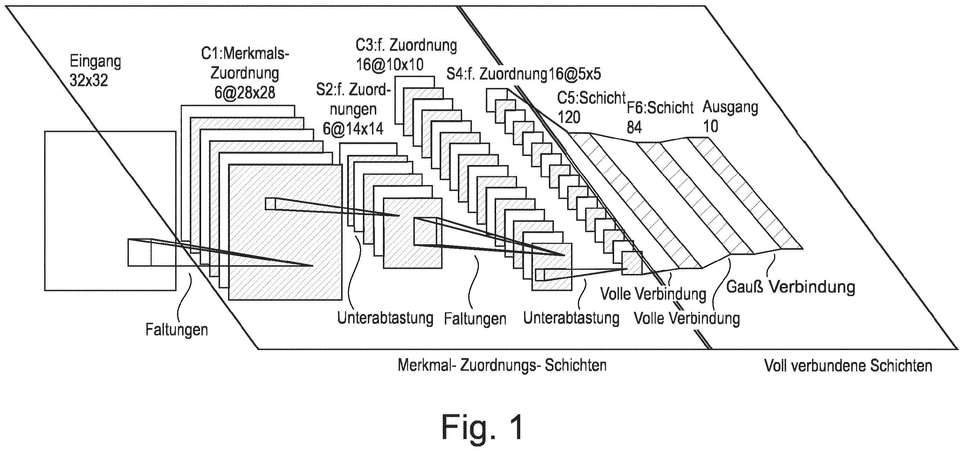

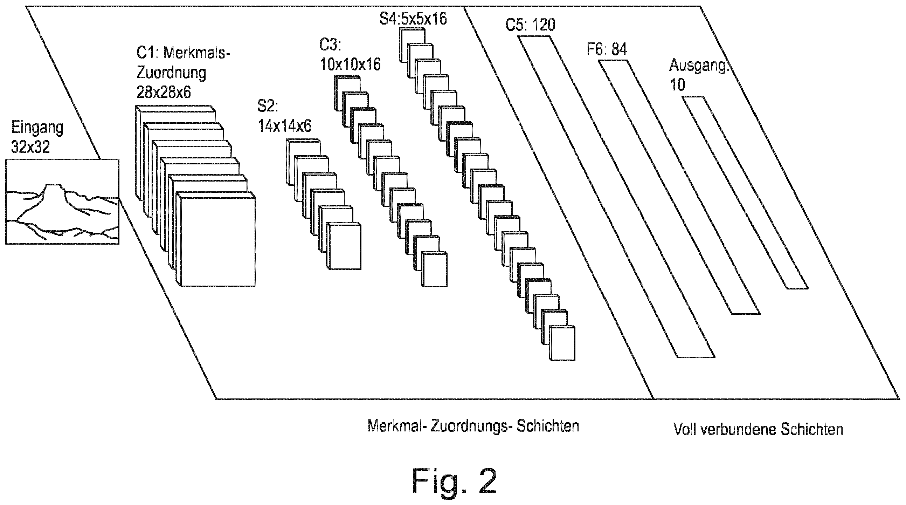

Auf dem Frontend (z.B. ferngesteuertes Fahrzeug) hingegen werden lediglich die Feature Maps bzw. die Charakterisierung bearbeitet (siehe Fig. 1 und 2).

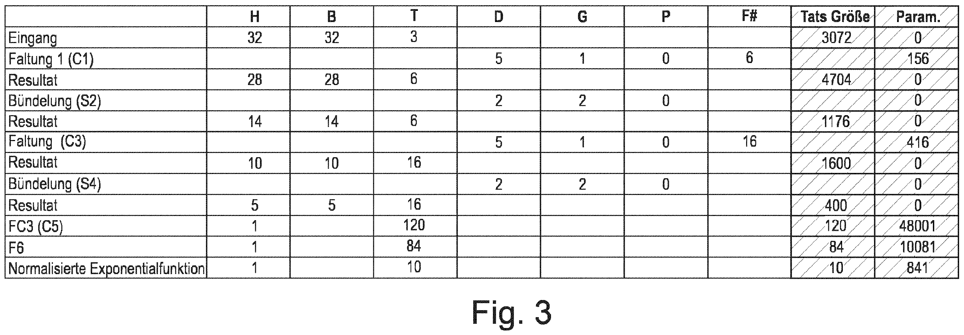

Wie in der Tabelle von Fig. 3 dargestellt, wächst die Menge an Lernparametern in dem anschließenden "Fully Connected" Anteil des Netzes gewaltig an, während die Parameteranzahl in den Feature Mapping Layers sehr gering ist (Convolutional and Pooling Layers).

Parallel dazu verringert sich die Pixel/Datenanzahl zu einem minimalen Bruchteil des ursprünglichen (Video-)Bildes.

Zwischen den Feature Mapping Layers und den "Fully Connected Layers" wird die Information serialisiert, d.h. Höhe und Breite = 1 und die Tiefe entspricht der maximalen Anzahl der Felder/Pixels aus der vorhergehenden Ebene.

Die Lösung sieht vor, dass die Trennung des Netzes in einen im Fahrzeug verbleibenden Anteil und einen Anteil in der Basisstation an einer Stelle mit einer minimierten Zahl an "Übergabeparametern" erfolgt, z.B zwischen "Convolutional Layers" und "Fully Connected Layers". Die riesige Anzahl von Fully Connected Verbindungen und der zugehörigen Parameter kann dann durch den Rechner der Basisstation erfolgen, während die konvolutionalen Layers und die Pooling Layers mit wenigen Lernparametern auf dem Fahrzeug berechnet werden.

Anstelle der Übertragung von mehreren Mbyte/s für komprimierte Videoströme, die oft durch die schwankende Bandbreite des Datenlinks auch keine konstante Bildqualität liefern, erfordert der beschriebene Ansatz lediglich Übertragungen im Bereich von KByte/s, selbst für die Objekterkennung in hochauflösenden Videos.

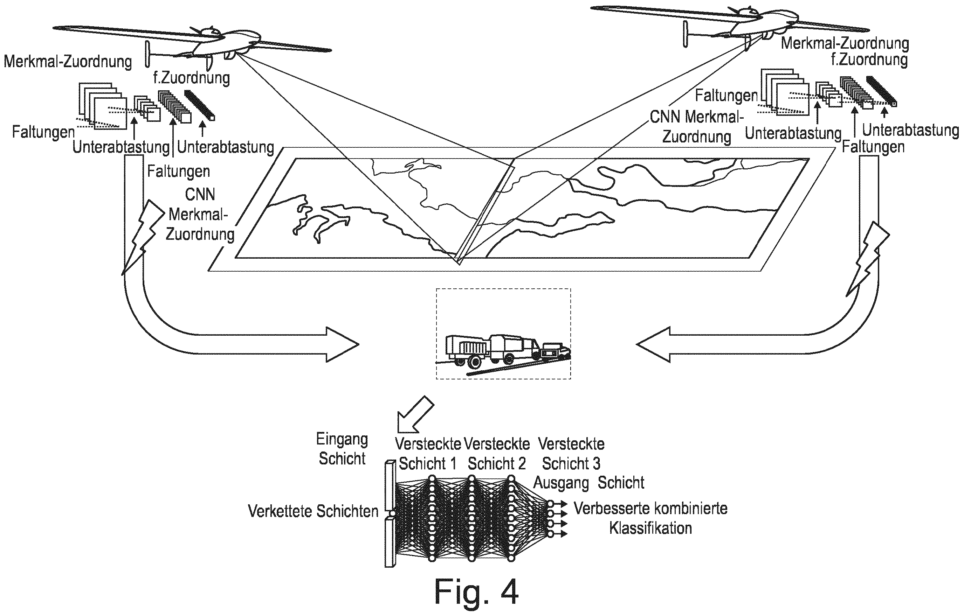

Das beschriebene Verfahrensprinzip der Objekterkennung mittels Aufspaltung in zwei Teile (z.B. Basis, Fahrzeug) kann verwendet werden, um die Qualität der Objekterkennung kontinuierlich zu verbessern (siehe Fig. 4) und ermöglicht den Einsatz dieser Technologie in Umgebungen mit eingeschränkter Verfügbarkeit von Rechner-Ressourcen.

Durch den Einsatz mehrerer Fahrzeuge oder zusätzlicher stationärer Sensoren können die Merkmals-Charakterisierungen der verschiedenen Quellen als serialisierte Repräsentation an der Basis zusammengeführt und über ein gemeinsames Fully Connected Netzwerk verarbeitet werden. Die Synchronisierung der Bildquellen ist vorausgesetzt.

Dies führt zu einer Qualitäts-Verbesserung der Vorhersagen, vor allem auch hinsichtlich der Objekterkennung.

Auch ist eine Implementierung von mehreren parallelen Netzwerken möglich, die dieselben Objekte aus verschiedenen Perspektiven, oder mit unterschiedlichem Netzaufbau analysieren, oder mit einem unterschiedlichen Satz von Trainingsbildern angelernt wurden können mit einem Vergleich der Ergebnisse gegenseitig Feedback für die Ausgangsknoten geben und können damit automatisch weiterlernen.

Im Vergleich zu bekannten Systemen kann die beschriebene Lösung auch auf kleinen und mittleren ferngesteuerten oder autonomen Fahrzeugen verwendet werden.

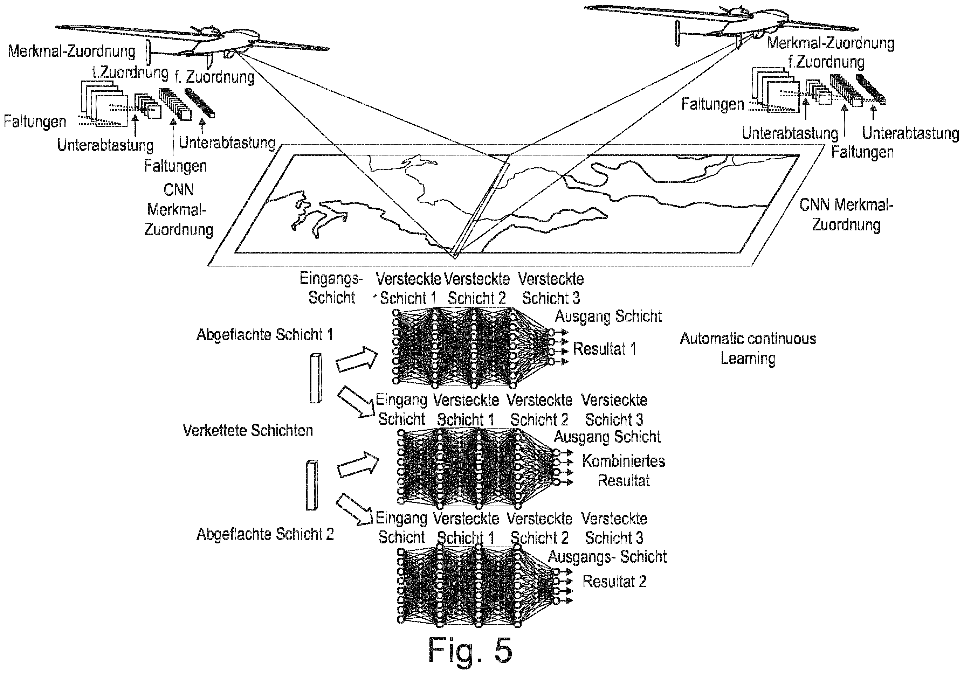

Das System kann auch nach Qualifikation des Vehikels (Fahrzeugs) weiterlernen, ohne dass das Fahrzeug modifiziert werden muss. Die Verbesserungen können an der Basisstation durchgeführt werden (vgl. auch Fig. 5).

Im Vergleich zu bekannten Systemen, könnte die beschriebene Lösung Objekte aus verschiedenen Blickwinkeln automatisch analysieren und die Ergebnisse durch gemeinsame Classification Layers verbessern (siehe auch Fig. 5).

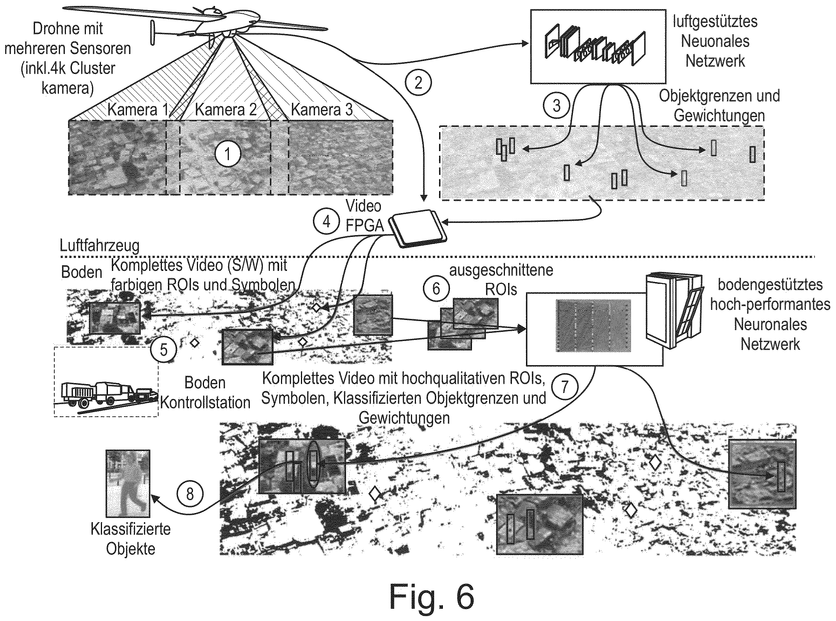

Fig. 6 zeige eine Variante in Form eines Funktions- und Einsatzprinzips. Die nachfolgend nummerierten Absätze beziehen sich auf die Positionsnummern (Ziffern im Kreis), die in Fig. 6 eingetragen sind.
(1) Zur Analyse großflächiger Szenarien, z.B. Katastrophengebieten nach einem Erdbeben, wird exemplarisch eine Drohne verwendet und zusätzlich zu den vorhandenen Taglicht- und Infrarot-Sensoren mit einer Cluster-Kamera ausgestattet. Diese besteht aus mehreren Einzelkameras (Kamera 1-3), die im Zusammenspiel einen sehr weiten Blickwinkel gewährleisten. Auf diese Weise ist es möglich, auch größere Gebiete bzw. Landschaften vollständig zu erfassen.
(2) Die Einzelvideos der Cluster-Kamera werden in einer Video-Verarbeitungseinheit an Bord der Drohne zu einem einzigen Video mit 4k Auflösung (z.B. UHD Video) zusammengefügt (sog. "Stitching"). Eine normalisierte (skalierte) Version dieses Videos wird einem eingebetteten Neuronalen Netzwerk zur Analyse und Objekterkennung zugeführt, während das komplette Video mit voller Auflösung parallel zu einer Videoverarbeitungseinheit weitergereicht wird. Das eingebettete Neuronale Netzwerk ist somit frontendseitig, d.h. in dem Luftfahrzeug (z.B. der Drohne) vorhanden.
(3) Das eingebettete Neuronale Netzwerk ist in der Lage, "interessante" Bildbereiche bzw. Objekte (z.B. mutmaßliche Opfer einer Naturkatastrophe, zerstörte Häuser etc.) zu erkennen, und liefert als Ausgabe die Koordinaten von Objektgrenzen (sogenannten "Bounding Boxes"), die gefundene Objekte markieren und zugehörige Gewichtungen ("Scores"), die die Wahrscheinlichkeit der Vorhersage bewerten.

Damit kann das eingebettete Neuronale Netzwerk bereits eine gewisse Vorauswertung der ermittelten Videodaten durchführen und mithilfe der vorhandenen Künstlichen Intelligenz mutmaßlich interessante Bildbereiche oder Objekte kennzeichnen.

Die Rechenleistung des eingebetteten Neuronalen Netzwerks reicht dabei in der Regel nicht aus, um die als "interessant" identifizierten Bildbereich bzw. die dort gefunden Objekte mit ausreichender Sicherheit und Genauigkeit zu qualifizieren.

(4) Die durch das Neuronale Netzwerk identifizierten Koordinaten und Wahrscheinlichkeiten werden von der Video-Verarbeitungseinheit benutzt, um die sog. ROIs (ROI - "Region of Interest") zu definieren. ROIs können eine größere Fläche als die vorher definierten Objektgrenzen haben und können auch mehrere dieser Markierungen enthalten. Wenn z.B. durch das Neuronale Netzwerk mehrere dicht nebeneinander liegende "interessante" Objekte identifiziert wurden, können diese zu einer einzigen ROI zusammengefasst werden.

Anhand der Wahrscheinlichkeitsparameter werden die wichtigsten ROIs direkt in das Video codiert, während weniger wahrscheinliche Bereiche über Symbole mit einem Farbcode markiert werden können.

Zur weiteren Erhöhung der Kompressionsrate können die Bereiche außerhalb der ROIs optional in schwarz-weiß Format übertragen werden, wie in Figur 6 dargestellt. Bei entsprechender Funk-Bandbreite kann selbstverständlich auch komplett in Farbe übertragen werden.

(5) Das codierte Video wird mit Symbolkoordinaten und ROIs über die Daten-Funkverbindung der Drohne zur Bodenkontrollstation gesendet und dort wieder dekodiert. Das Video weist somit Bereiche mit hoher Auflösung (mit den ROIs) und - je nach Bandbreite der Verbindung zwischen der Drohne und der Bodenstation - niedriger Auflösung (ggfs. auch nur in schwarz-weiß) auf.

(6) Zur detaillierten Analyse der ROIs werden diese aus dem Video automatisch ausgeschnitten und einem bodengestützten Neuronalen Netzwerk zugeführt. Dieses Netzwerk arbeitet auf einem dedizierten KI-Rechner mit hochperformantem Prozessor und mehreren GPUs.

Die Bearbeitung am Boden wird letztendlich durch den Mechanismus der ROIs ermöglicht, die ein hochqualitatives und trotz schwankender Funkbandbreite stabiles Videomaterial für diese Bereiche liefern.

(7) Der am Boden stationierte KI-Rechner verwendet ein erheblich tieferes Neuronales Netz als die luftgestützte Komponente auf dem Flugzeug und bietet nahezu unlimitierte Ressourcen zur Analyse und Objekterkennung.

Der KI-Rechner stellt schließlich das komplette Video auf der Anzeigeeinheit am Boden dar. Dieses enthält die ROIs mit neuen Objektgrenzen, einer Klassifizierung (8) für die identifizierten Objekte und den Symbolen für weitere Bereiche, die nicht als ROI codiert wurden.

Der Operateur am Boden kann die Darstellung dynamisch verändern. Er kann beispielsweise
- die angezeigten ROIs dynamisch verschieben und/oder
- ROIs in der Größe verändern
- Symbole auswählen und diese als ROI anzeigen lassen (das ROI mit dem niedrigsten Score verschwindet dann und wird zum Symbol)
- ein ROI selbst definieren
- Farb- oder Schwarz-Weiß Darstellung wählen.

## Patentansprüche

1. System zur Objekterkennung mittels verteilter Neuronaler Netze, wobei
- ein hoch-performantes Neuronales Netzwerk auf einer Basisstation vorgesehen ist;
- ein geringer-performantes Neuronales Netzwerk auf einer Frontendseite vorgesehen ist, wobei das geringer-perfomante Neuronale Netzwerk eine geringere Tiefe und damit eine geringere Leistungsfähigkeit aufweist als das hochperformante Neuronale Netzwerk;
- auf der Frontendseite eine hochauflösende Kameravorrichtung vorgesehen ist, zum Erzeugen eines hochauflösenden Videos;
- das frontendseitige Neuronale Netzwerk ausgebildet ist, um in dem Video interessante Bildbereiche zu erkennen und zu markieren, wobei die interessanten Bildbereiche Bildbereiche sind, die charakteristische Merkmale enthalten, die auf im Rahmen einer Objekterkennungsmission zu erkennende Objekte rückschließen lassen, wobei die abschließende Bewertung und Charakterisierung aufgrund der geringeren Leistungsfähigkeit des frontendseitigen Neuronalen Netzwerks nicht möglich ist;
**dadurch gekennzeichnet, dass** das System umfasst:
- eine Videoverarbeitungseinrichtung zum Auswählen und Definieren von ROIs, ROI - 'Region of Interest', aufgrund der vorher erkannten interessanten Bildbereiche und zum Codieren der ROIs in das Video;
- eine Daten-Funkverbindung zum Übertragen des Videos von der Videoverarbeitungseinrichtung zu der Basisstation; und wobei
- das basisstationsseitige Neuronale Netzwerk ausgebildet ist, um aus dem empfangenen Video extrahierte ROIs auszuwerten und in den ROIs vorhandene Objekte zu erkennen.

2. System nach Anspruch 1, wobei
- eine Anzeigeeinrichtung vorgesehen ist, zum Anzeigen der von dem basisstationsseitigen Neuronalen Netzwerk erkannten Objekte.

3. System nach einem der Ansprüche 1 oder 2, wobei
- eine Bedieneinrichtung vorgesehen ist, zum Verändern von Parametern des Systems; wobei
- wenigstens einer der Parameter ausgewählt ist aus der Gruppe
+ Lage der ROIs;
+ Größe der ROIs;
+ Wertung der ROIs;
+ Darstellung einer ROI;
+ Definieren einer neuen ROI;
+ Festlegen eine Farb- oder Schwarz-Weiß-Darstellung

4. Verfahren zur Objekterkennung, mit den Schritten
- Bereitstellen eines hoch-performantes Neuronales Netzwerk auf einer Basisstation;
- Bereitstellen eines geringer-performanten Neuronalen Netzwerks auf einer Frontendseite, wobei das geringer-perfomante Neuronale Netzwerk eine geringere Tiefe und damit eine geringere Leistungsfähigkeit aufweist als das hochperformante Neuronale Netzwerk;
- Erzeugen eines hochauflösenden Videos auf der Frontendseite;
- Erkennen von interessanten Bildbereichen in dem Video durch das frontendseitige Neuronale Netzwerk und Markieren dieser Bildbereiche, wobei die interessanten Bildbereiche Bildbereiche sind, die charakteristische Merkmale enthalten, die auf im Rahmen einer Objekterkennungsmission zu erkennende Objekte rückschließen lassen, wobei die abschließende Bewertung und Charakterisierung aufgrund der geringeren Leistungsfähigkeit des frontendseitigen Neuronalen Netzwerks nicht möglich ist;
**dadurch gekennzeichnet, dass** das Verfahren die folgenden Schritte umfasst:
- Auswählen und Definieren von ROIs, ROI - 'Region of Interest', aufgrund der vorher erkannten interessanten Bildbereiche und Codieren der ROIs in das Video;
- Übertragen des Videos von der Frontendseite zu der Basisstation;
- Extrahieren von ROIs aus dem empfangenen Video; und
- Auswerten der extrahierten ROIs und Erkennen von in den ROIs vorhandenen Objekten durch das basisstationsseitige Neuronale Netzwerk.

## Claims

1. A system for identifying objects by means of distributed neural networks, wherein
- a highly performant neural network is provided at a base station;
- a less performant neural network is provided on a front-end side, wherein the less performant neural network has a lower depth and thus a lower performance capacity than the highly performant neural network;
- a high-resolution camera device is provided on the front-end side for generating a high-resolution video;
- the front-end side neural network is designed to identify and mark image areas of interest in the video, wherein the image areas of interest are image areas which contain characteristic features which allow conclusions on objects to be identified within the scope of an object identification mission, wherein the final evaluation and characterization is not possible due to the lower performance capacity of the front-end side neural network;
**characterized in that** the System comprises:
- a video-processing means for selecting and defining ROIs, ROI - 'Region of Interest', due to the previously identified image areas of interest and for encoding the ROIs into the video;
- a data radio connection for transmitting the video from the video-processing means to the base station; and wherein
- the base-station side neural network is designed to evaluate the ROIs extracted from the video received and identify objects present in the ROIs.

2. The system according to claim 1, wherein
- a display means is provided for displaying the objects identified by the base-station side neural network.

3. The system according to any one of claims 1 or 2, wherein
- an operating means is provided for changing parameters of the system; wherein
- at least one of the parameters is selected from the group of:
+ position of the ROIs;
+ size of the ROIs;
+ evaluation of the ROIs;
+ display of an ROI;
+ defining a new ROI;
+ deciding on a color or black-and-white display.

4. A method for identifying objects, comprising the steps of:
- providing a highly performant neural network at a base station;
- providing a less performant neural network on a front-end side, wherein the less performant neural network has a lower depth and thus a lower performance capacity than the highly performant neural network;
- generating a high-resolution video on the front-end side;
- identifying image areas of interest in the video by the front-end side neural network and marking these image areas, wherein the image areas of interest are image areas which contain characteristic features which allow conclusions on objects to be identified within the scope of an object identification mission, wherein the final evaluation and characterization is not possible due to the lower performance capacity of the front-end side neural network;
**characterized in that** the method comprises the following steps:
- selecting and defining ROIs, ROI - 'Region of Interest', due to the previously identified image areas of interest and encoding the ROIs into the video;
- transmitting the video from the front-end side to the base station;
- extracting ROIs from the video received; and
- evaluating the extracted ROIs and identifying objects present in the ROIs by the base-station side neural network.

## Revendications

1. Système pour la reconnaissance d'objets au moyen de réseaux neuronaux distribués, dans lequel
- un réseau neuronal de haute performance est prévu sur une station de base ;
- un réseau neuronal de faible performance est prévu d'un côté frontal, dans lequel le réseau neuronal de faible performance présente une profondeur moindre et avec cela une performance moindre que le réseau neuronal de haute performance ;
- un dispositif de prise de vues de haute résolution est prévu du côté frontal pour générer une vidéo de haute résolution ;
- le réseau neuronal du côté frontal est agencé pour reconnaître des zones d'image intéressantes dans la vidéo et les marquer, dans lequel les zones d'image intéressantes sont des zones d'image qui contiennent des caractéristiques typiques, qui permettent de déduire des objets à reconnaître dans le cadre d'une tâche de reconnaissance d'objets, dans lequel l'évaluation et la caractérisation finales ne sont pas possibles en raison de la moindre performance du réseau neuronal du côté frontal ;
**caractérisé en ce que** le système comprend :
- un dispositif de traitement de vidéos pour choisir et définir des ROIs, ROI - 'région d'intérêt', sur la base des zones d'image intéressantes reconnues au préalable et pour coder les ROIs dans la vidéo ;
- une liaison radio de données pour transmettre la vidéo du dispositif de traitement de vidéos à la station de base ; et dans lequel
- le réseau neuronal du côté station de base est agencé pour évaluer des ROIs extraits de la vidéo reçue et pour reconnaître des objets présents dans les ROIs.

2. Système selon la revendication 1, dans lequel
- un dispositif d'affichage est prévu pour afficher les objets reconnus par le réseau neuronal du côté station de base.

3. Système selon l'une des revendications 1 ou 2, dans lequel
- un dispositif d'utilisation est prévu pour modifier des paramètres du système ; dans lequel
- au moins un des paramètres est choisi parmi le groupe
+ position des ROIs ;
+ taille des ROIs ;
+ évaluation des ROIs ;
+ représentation d'un ROI ;
+ définition d'un nouveau ROI ;
+ fixation d'une représentation en couleurs ou en noir et blanc.

4. Procédé pour la reconnaissance d'objets comprenant les étapes :
- fournir un réseau neuronal de haute performance sur une station de base ;
- fournir un réseau neuronal de faible performance d'un côté frontal, dans lequel le réseau neuronal de faible performance présente une profondeur moindre et avec cela une performance moindre que le réseau neuronal de haute performance ;
- générer une vidéo de haute résolution du côté frontal ;
- reconnaître des zones d'image intéressantes dans la vidéo grâce au réseau neuronal du côté frontal et marquer lesdites zones d'image, dans lequel les zones d'image intéressantes sont des zones d'image qui contiennent des caractéristiques typiques, qui permettent de déduire des objets à reconnaître dans le cadre d'une tâche de reconnaissance d'objets, dans lequel l'évaluation et la caractérisation finales ne sont pas possibles en raison de la moindre performance du réseau neuronal du côté frontal ;
**caractérisé en ce que** le procédé comprend les étapes suivantes :
- choisir et définir des ROIs, ROI - 'région d'intérêt' sur la base des zones d'image intéressantes reconnues au préalable et du codage des ROIs dans la vidéo ;
- transmettre la vidéo du côté frontal à la station de base ;
- extraire des ROIs de la vidéo reçue ; et
- évaluer les ROIs extraits et reconnaître des objets présents dans les ROIs grâce au réseau neuronal du côté station de base.
